# EUROPEAN PATENT APPLICATION

(11) **EP 4 775 361 A1**
(43) Date of publication of application: **15.07.2026**
(21) Application number: 24862674.9
(22) Date of filing: 28.08.2024
(51) Int. Cl.: B25J 15/06

(54) **MAGNET GRIPPER AND INDUSTRIAL ROBOT**

(30) Priority: 04.09.2023 WO PCT/JP2023/032228
(71) Applicant: SMC Corporation, Tokyo 104-0031 (JP)
(72) Inventor: ISHIZAWA, Naohiro, 63329 Egelsbach (DE)
(74) Representative: Keil & Schaafhausen Patentanwälte PartGmbB
(86) International application number: PCT/JP2024/030731
(87) International publication number: WO 2025/053022

(57) **Abstract**

A magnet gripper (14) comprises a pair of pole shoes (16, 18), each of which has a magnetically attracting portion (32a) to which a workpiece (W) is magnetically attracted, and which are disposed spaced apart from one another in a first direction, a magnet (35) which is disposed between the pair of pole shoes (16, 18), a rotation mechanism (22) which rotates the magnet (35) about a rotation axis (C) in a second direction perpendicular to the first direction, and a yoke (36) which is disposed between the pair of pole shoes (16, 18) and which collects magnetic flux that is not directed toward the pole shoes (16, 18), wherein the yoke (36) is magnetically separated from the pair of pole shoes (16, 18).

## Description

### TECHNICAL FIELD

The present invention relates to a magnetic gripper (magnet gripper) that holds a workpiece having magnetic properties by using a magnetic force, and an industrial robot.

### BACKGROUND ART

The magnetic gripper is a gripper that attracts a workpiece having magnetic properties such as a steel material by generating a magnetic force. For example, in a production line of an automobile factory, a magnetic gripper is attached to an industrial robot that conveys a steel sheet. The magnetic gripper may locally magnetize the steel sheet due to its magnetic force. When paint for metallic painting is applied to a magnetized steel sheet, flakes having magnetic properties are oriented in a magnetized portion of the steel sheet, and there is a problem that a pattern reflecting a magnetization distribution is generated.

As a method for solving such a problem, a magnetic gripper having a demagnetization function has been proposed, as disclosed in JP 2021-515391 A. The above-mentioned magnetic gripper has an electromagnetic coil for demagnetization in addition to magnets for generating an attraction force. This magnetic gripper uses the electromagnetic coil for demagnetization to magnetize a workpiece that has been magnetized by the magnets so as to reverse the magnetic poles, thereby reducing the magnetic force of the steel sheet.

### SUMMARY OF THE INVENTION

However, the magnetic gripper disclosed in JP 2021-515391 A requires the electromagnetic coil for demagnetization and a control circuit therefor in addition to a drive mechanism for driving the magnets, and thus has a problem that the structure of the device and the control circuit therefor are complicated.

The present invention has the object of solving the aforementioned problems.

One aspect of the following disclosure is characterized by a magnetic gripper including a pair of pole shoes each including an attraction portion to which a workpiece is attracted, the pair of pole shoes being disposed apart from each other in a first direction, a magnetic flux source disposed between the pair of pole shoes and including a pair of magnetic poles orientable in the first direction, a rotation mechanism configured to rotate the magnetic flux source about a rotation axis lying in a second direction perpendicular to the first direction, and a yoke disposed between the pair of pole shoes and configured to collect magnetic flux not directed toward the pole shoes, wherein the yoke is magnetically separated from the pair of pole shoes.

Another aspect is characterized by a magnetic gripper including a pair of pole shoes each including an attraction portion to which a workpiece is attracted, the pair of pole shoes being disposed apart from each other in a first direction, a single magnetic flux source disposed between the pair of pole shoes and including a pair of magnetic poles orientable in the first direction, a rotation mechanism configured to rotate the magnetic flux source about a rotation axis extending in a second direction perpendicular to the first direction, and a magnetic field sensor configured to detect a magnetic field of the pole shoes.

Still another aspect is characterized by an industrial robot including the magnetic gripper according to above aspects and a robot arm to which the magnetic gripper is attached.

The magnetic gripper and the industrial robot according to the above aspects can demagnetize the workpiece with a simple configuration.

The above and other objects, features, and advantages of the present invention will be easily understood from the following description when taken in conjunction with the accompanying drawings.

### BRIEF DESCRIPTION OF DRAWINGS

[FIG. 1] FIG. 1 is a perspective view of an industrial robot according to a first embodiment;
[FIG. 2] FIG. 2 is a perspective view showing the external appearance of a magnetic gripper according to the embodiment, attached to the industrial robot of FIG. 1;
[FIG. 3] FIG. 3 is an exploded perspective view of the magnetic gripper of FIG. 2, and in FIG. 3, a housing is omitted;
[FIG. 4] FIG. 4 is a view showing a cross section of the magnetic gripper of FIG. 2;
[FIG. 5] FIG. 5 is a cross-sectional view of the magnetic gripper of FIG. 2 taken along a plane perpendicular to a second direction at a position of a magnet, and shows an orientation of the magnetic poles when the magnet angle of the magnet is 0 degrees.
[FIG. 6] FIG. 6A is a cross-sectional view showing an arrangement of magnetic poles when the magnet is rotated to a magnet angle -θ in the cross section of FIG. 5, and 6B is a cross-sectional view showing an arrangement of the magnetic poles when the magnet is rotated to a magnet angle +θ in the cross section of FIG. 5;
[FIG. 7] FIG. 7 is a cross-sectional view showing an arrangement of the magnetic poles when the magnet is rotated to a magnet angle of -90 degrees;
[FIG. 8] FIG. 8 is a graph showing a relationship between the magnet angle θ of the magnet and an attraction force, which is obtained by calculation based on electromagnetic field analysis; [FIG. 9] FIG. 9 is an explanatory view showing an exemplary modification of the magnet;
[FIG. 10] FIG. 10 is a perspective view showing an appearance of a magnetic gripper according to a second embodiment;
[FIG. 11] FIG. 11 is a perspective view showing a main part of the magnetic gripper of FIG. 10 in an exploded state;
[FIG. 12] FIG. 12 is a cross-sectional view taken along line XII-XII of FIG. 10;
[FIG. 13] FIG. 13 is a cross-sectional view taken along line XIII-XIII of FIG. 10; and
[FIG. 14] FIG. 14 is an exploded perspective view of a magnetic circuit member according to an exemplary modification of the second embodiment.

### DETAILED DESCRIPTION OF THE INVENTION

### (First Embodiment)

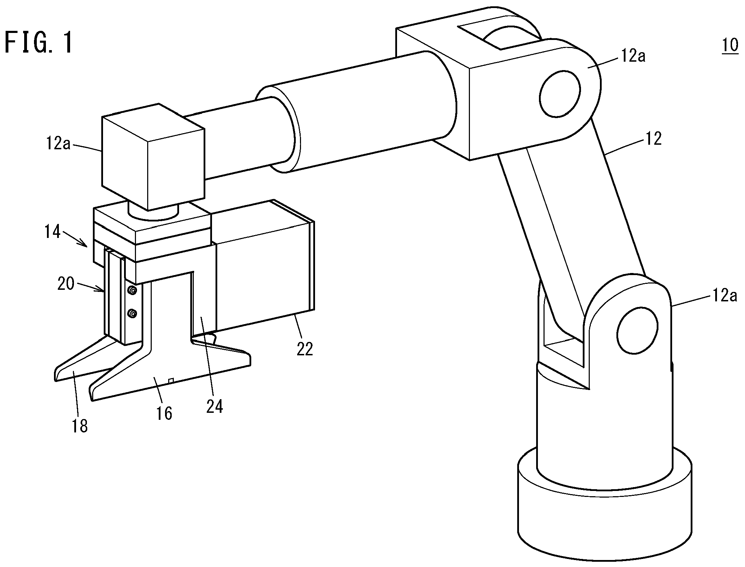

As shown in FIG. 1, an industrial robot 10 according to an embodiment includes a robot arm 12 that is movable at a plurality of joints 12a, and a magnetic gripper 14 that is attached to a distal end of the robot arm 12. The industrial robot 10 is used for conveying a workpiece W having magnetic properties such as a steel sheet or various components in a production line of an automobile factory, for example. The magnetic gripper 14 of FIG. 1 shows a shape suitable for attracting a thin sheet-shaped workpiece W as one configuration thereof.

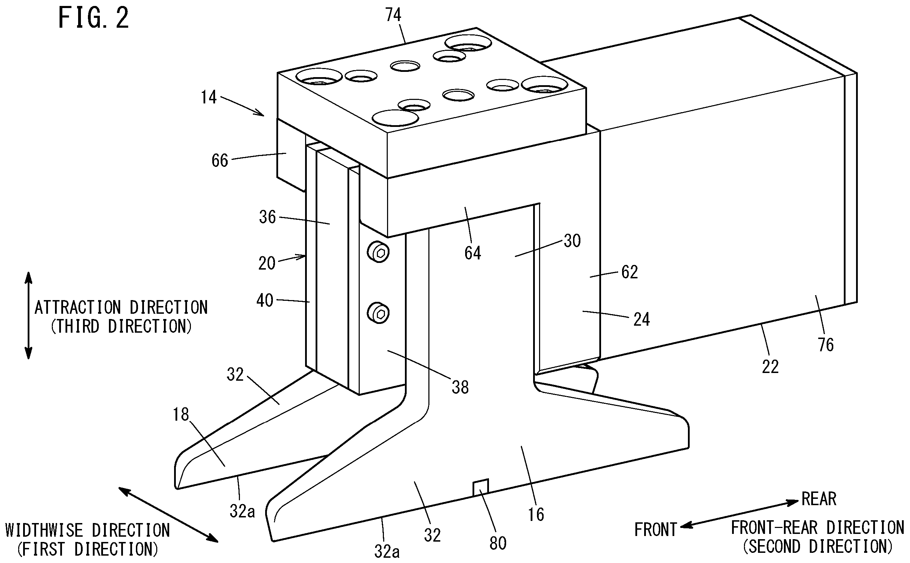

The magnetic gripper 14 shown in FIG. 2 includes a first pole shoe 16, a second pole shoe 18, a magnetic force adjustment unit 20, a rotation mechanism 22, and a frame member 24. The magnetic gripper 14 attracts and holds the workpiece W by the first pole shoe 16 and the second pole shoe 18. In the following description, in order to clarify the shapes and arrangement relationships of members, a widthwise direction, an attraction direction, and a front-rear direction shown in FIG. 2 are used as terms indicating three directions perpendicular to one another. The attraction direction is a direction in which an attraction force is generated with respect to the workpiece W. The widthwise direction is a direction in which the first pole shoe 16 and the second pole shoe 18 are separated from each other, and is also referred to as a first direction. The front-rear direction is a direction perpendicular to the attraction direction and the widthwise direction.

Further, a second direction and a third direction are used as terms indicating arrangement directions of a magnet 35 and a yoke 36 described later. The second direction is an extending direction of a rotation axis C of the magnet 35 described later, and the third direction is an extending direction of a distal end wall 36a of the yoke 36. In the illustrated example, the front-rear direction coincides with the second direction, and the attraction direction coincides with the third direction, but the present invention is not limited thereto. The magnet 35 and the yoke 36 may be arranged such that, for example, the attraction direction coincides with the second direction and the front-rear direction coincides with the third direction. The widthwise direction, the attraction direction, and the front-rear direction do not limit the arrangement direction of the magnetic gripper 14.

The first pole shoe 16 and the second pole shoe 18 are formed of a ferromagnetic material, or more preferably, a soft magnetic material. The first pole shoe 16 is formed in a thin plate shape extending in the attraction direction. The first pole shoe 16 has a rectangular base portion 30 and a leg portion 32 extending from the base portion 30. The leg portion 32 extends in the front-rear direction from the base portion 30. The first pole shoe 16 including the base portion 30 and the leg portion 32 has a T-shape configuration when viewed in the widthwise direction.

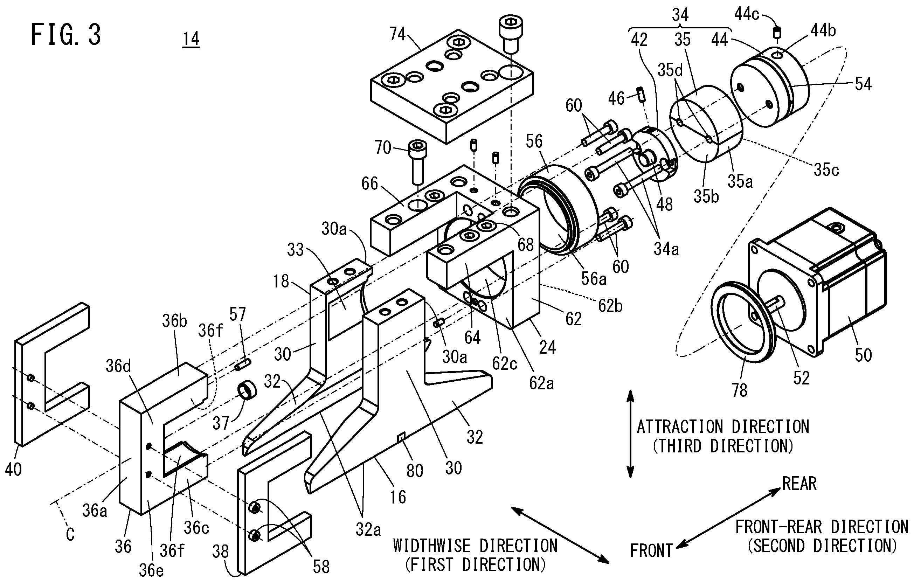

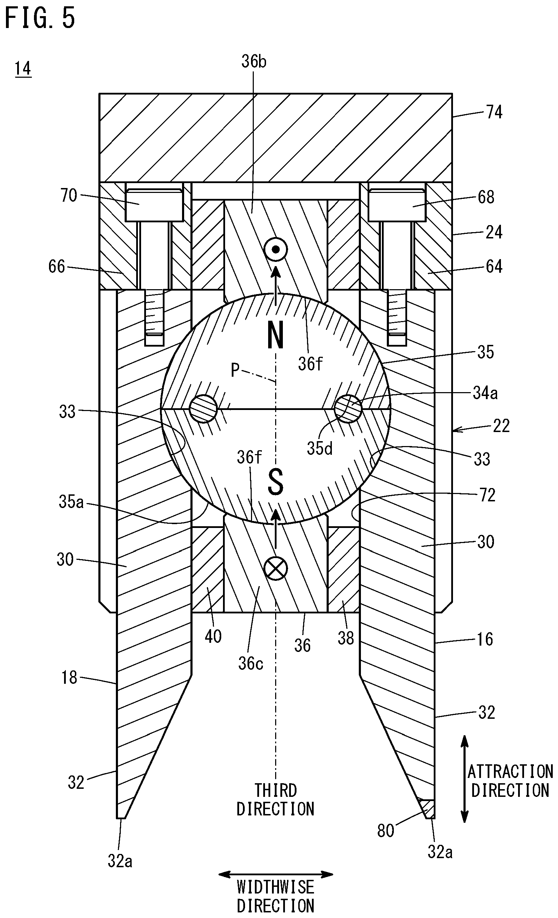

The first pole shoe 16 has an attraction portion 32a at an end portion (a lower end portion in FIG. 2) of the leg portion 32. The attraction portion 32a is a portion that emits magnetic flux toward the workpiece W, and is attracted to the workpiece W using magnetic force. The thickness (size in the widthwise direction) of the leg portion 32 gradually decreases toward the attraction portion 32a in order to concentrate the magnetic flux on the attraction portion 32a. As shown in FIGS. 3 and 5, the first pole shoe 16 has a concave portion 33 in the base portion 30 so as not to interfere with the cylindrical columnar magnet 35. The concave portion 33 is formed with a curved surface along the radius of rotation of the magnet 35. The concave portion 33 may be in contact with the magnet 35 or be out of contact with the magnet 35.

As shown in FIG. 3, the second pole shoe 18 is formed in the same shape as the first pole shoe 16, and thus, the detailed description of the second pole shoe 18 will be omitted. In the respective portions of the second pole shoe 18, the same portions as those of the first pole shoe 16 are denoted by the same reference numerals of the corresponding portions of the first pole shoe 16. The second pole shoe 18 is disposed in parallel with the first pole shoe 16 while being spaced apart from the first pole shoe 16 in the widthwise direction. A gap is formed between the first pole shoe 16 and the second pole shoe 18. In some embodiments, the width of the gap between the first pole shoe 16 and the second pole shoe 18 may be greater than the thickness of the first pole shoe 16 or the thickness of the second pole shoe 18.

The configuration of the first pole shoe 16 and the second pole shoe 18 is not limited to the T-shape configuration. The first pole shoe 16 and the second pole shoe 18 may have, for example, an I-shape configuration or an L-shape configuration when viewed in the widthwise direction.

A magnetic field sensor 80 is provided on the attraction portion 32a of the first pole shoe 16. The magnetic field sensor 80 detects the intensity of the magnetic field flowing between the workpiece W and the first pole shoe 16. In a case where the workpiece W is a thin plate, when the magnetic field generated by the first pole shoe 16 (and the second pole shoe 18) is too strong, there is a possibility that a plurality of workpieces W are held in a state of being overlapped. The magnetic field sensor 80 can detect attraction of a plurality of workpieces W by detecting the intensity of the magnetic field generated by the first pole shoe 16. The magnetic field sensor 80 may be provided in the second pole shoe 18, or may be provided in both the first pole shoe 16 and the second pole shoe 18. The attachment position of the magnetic field sensor 80 is not limited to the attraction portion 32a, and the magnetic field sensor 80 may be provided at any position on the path of the magnetic circuit formed by the first pole shoe 16 and the second pole shoe 18.

As shown in FIG. 2, the magnetic force adjustment unit 20 is disposed between the first pole shoe 16 and the second pole shoe 18. The magnetic force adjustment unit 20 adjusts a magnetic field directed toward the first pole shoe 16 and the second pole shoe 18.

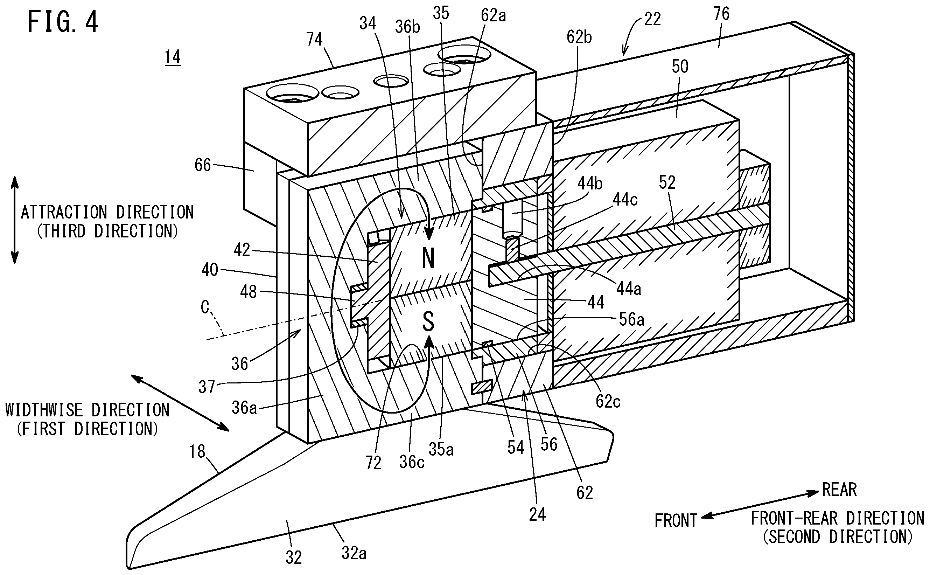

As shown in FIGS. 3 and 4, the magnetic force adjustment unit 20 includes a magnet assembly 34, the yoke 36, a first spacer 38, and a second spacer 40. In these components, the magnet assembly 34 is a cylindrical columnar member including the magnet 35 as a magnetic flux source. The magnet assembly 34 includes the magnet 35, a pin holder 42, and a magnet holder 44. As shown in FIG. 3, the magnet 35 is sandwiched between the pin holder 42 and the magnet holder 44. The pin holder 42 and the magnet holder 44 are connected to the magnet 35 by bolts 34a. Accordingly, the magnet assembly 34 is configured.

The magnet 35 has a cylindrical columnar configuration. The magnet 35 is rotatable about a rotation axis C at the center thereof. Here, a case where the second direction, which is the extending direction of the rotation axis C, coincides with the front-rear direction will be described as an example. However, the present embodiment is not limited thereto, and the extending direction (second direction) of the rotation axis C may be the attraction direction.

The magnet 35 is a permanent magnet and has a pair of magnetic poles by being magnetized in the radial direction. The magnet 35 has a center of an N pole (a portion having the highest magnetic flux density) at a predetermined position in the circumferential direction of an outer circumferential surface 35a, and has a center of an S pole at a position separated by 180 degrees in the circumferential direction with respect to the N pole.

As shown in FIG. 3, the magnet 35 has a distal end surface 35b at one end in the second direction and a rear end surface 35c at another end. The distal end surface 35b and the rear end surface 35c are formed of flat surfaces perpendicular to the second direction. The pin holder 42 is attached to the distal end surface 35b, and the magnet holder 44 is attached to the rear end surface 35c. The pin holder 42 and the magnet holder 44 are coupled to the magnet 35 by the bolts 34a that are inserted through attachment holes 35d that penetrate the magnet 35 in the second direction.

The length of the magnet 35 in the second direction may be increased or decreased as appropriate according to the desired attraction force. The increase in the length of the magnet 35 in the second direction increases the magnetic flux emitted by the magnet 35, thereby providing a larger attraction force.

The shape of the magnet 35 is not limited to a cylinder columnar configuration, and may be, for example, a plate shape extending in the rotation axis C. In this case, the plate-shaped magnet may be magnetized such that the magnetic poles appear on the side portions.

The pin holder 42 is a disk-shaped member having an outer diameter smaller than that of the magnet 35, and has a first pin 46 on an outer circumferential portion thereof. The first pin 46 is, for example, a parallel pin, and rotates integrally with the magnet 35. The first pin 46 abuts against a second pin 57 described later to limit the rotation range of the magnet 35 so that the magnet 35 does not rotate one or more times. The pin holder 42 has a shaft projection 48 projecting short in the second direction coaxially with the rotation axis C at the central part thereof. The shaft projection 48 is supported by a bush 37 fixed to the yoke 36 so as to be rotatable with respect to the yoke 36 (see FIG. 4).

The magnet holder 44 is fixed to the rear end surface 35c of the magnet 35. The magnet holder 44 is a cylindrical columnar member having an outer diameter substantially equal to that of the magnet 35, and is disposed coaxially with the magnet 35. As shown in FIG. 4, the magnet holder 44 has a shaft hole 44a extending along the rotation axis C at an end portion in a direction away from the magnet 35. The shaft hole 44a accommodates a distal end of a rotating shaft 52 of a motor 50 of the rotation mechanism 22. The magnet holder 44 and the rotating shaft 52 are fixed by a set screw 44c attached to the magnet holder 44. The set screw 44c is screwed into a screw hole 44b penetrating from a side portion of the magnet holder 44 to the shaft hole 44a.

As shown in FIG. 3, the magnet holder 44 has a wear ring 54 on the outer circumferential portion thereof. The wear ring 54 is formed of a material having a small frictional resistance and being hard to wear, such as fluororesin or polyethylene resin. The wear ring 54 is disposed inside an inner diameter portion 56a of a cylindrical sleeve 56, and rotates while sliding inside the sleeve 56.

The yoke 36 is formed of a ferromagnetic material, more preferably a soft magnetic material. As shown in FIG. 3, the yoke 36 has a C-shape when viewed in the widthwise direction (first direction), and has the distal end wall 36a, a first wall portion 36b, and a second wall portion 36c. The distal end wall 36a extends in a third direction (the attraction direction in the illustrated example) perpendicular to the first direction and the second direction. The distal end wall 36a is located outward of the distal end surface 35b of the magnet 35. The first wall portion 36b extends from a first end portion 36d of the distal end wall 36a toward the magnet 35 in the front-rear direction (second direction), and the second wall portion 36c extends from a second end portion 36e of the distal end wall 36a toward the magnet 35 in the front-rear direction (second direction).

As shown in FIG. 4, the first wall portion 36b and the second wall portion 36c sandwich the outer circumferential surface 35a of the magnet 35 from both sides in the third direction. Each of the first wall portion 36b and the second wall portion 36c has a concave portion 36f at a portion facing the magnet 35, having a curvature slightly larger than the radius of rotation of the outer circumferential surface 35a of the magnet 35. The concave portion 36f is formed to be recessed so as not to interfere with the outer circumferential surface 35a of the magnet 35, and allows the rotation of the magnet 35. The magnet 35 may be in sliding contact with the concave portion 36f or be out of contact with the concave portion 36f.

As shown in FIG. 3, the yoke 36 has the second pin 57. The second pin 57 is, for example, a parallel pin, and is attached to the distal end wall 36a of the yoke 36. The second pin 57 protrudes toward the magnet assembly 34 and abuts against the first pin 46 to limit the rotation range of the magnet 35. When the motor 50 is configured by a stepper motor, a magnet angle θ (rotational position) at which the first pin 46 and the second pin 57 abut against each other can be used for initialization of the motor 50.

The first spacer 38 and the second spacer 40 are formed of a non-magnetic material. In some embodiments, the non-magnetic material includes a paramagnetic material and a diamagnetic material. The first spacer 38 and the second spacer 40 have substantially the same C-shape configuration as the yoke 36 when viewed in the widthwise direction. The thickness (the dimension in the first direction) of the first spacer 38 and the thickness (the dimension in the first direction) of the second spacer 40 are the same, and can be made thinner than the thickness of the yoke 36. The first spacer 38 is disposed between the yoke 36 and the first pole shoe 16, and the second spacer 40 is disposed between the yoke 36 and the second pole shoe 18. As shown in FIG. 3, the first spacer 38 and the second spacer 40 are fixed to the yoke 36 through bolts 58.

The first spacer 38 and the second spacer 40 weaken the magnetic coupling between the yoke 36 and the first pole shoe 16 and the second pole shoe 18, and magnetically separate the yoke 36 from the first pole shoe 16 and the second pole shoe 18. When the workpiece W made of a ferromagnetic material is attracted to the first pole shoe 16 and the second pole shoe 18, the first pole shoe 16 and the second pole shoe 18 are magnetically coupled to each other via the workpiece W. In this case, the yoke 36 is magnetically separated from the first pole shoe 16 or the second pole shoe 18 (magnetic coupling is weak). Therefore, the magnetic flux is less likely to pass through the yoke 36 (less likely to be short-circuited), and the yoke 36 does not hinder the attraction of the workpiece W.

When the magnetic poles of the magnet 35 are directed toward the first wall portion 36b and the second wall portion 36c of the yoke 36, most of the magnetic flux of the magnet 35 flows through the magnetic circuit passing through the yoke 36. On the other hand, since the yoke 36 is magnetically separated, leakage of the magnetic field to the first pole shoe 16 and the second pole shoe 18 is prevented.

The first spacer 38 and the second spacer 40 seal gaps between the yoke 36 and the first pole shoe 16 and between the yoke 36 and the second pole shoe 18, respectively, to prevent dust from entering the magnetic force adjustment unit 20. The first spacer 38 and the second spacer 40 are not necessarily required as means for weakening the magnetic coupling between the yoke 36 and the first pole shoe 16 and the second pole shoe 18. In some embodiments, gaps may be provided instead of the first spacer 38 and the second spacer 40.

As shown in FIG. 3, the first wall portion 36b and the second wall portion 36c of the yoke 36 are fastened to the frame member 24 by bolts 60. The first pole shoe 16 and the second pole shoe 18 are fixed to the frame member 24 together with the yoke 36.

The frame member 24 includes a partition wall 62, a first arm portion 64, and a second arm portion 66. The partition wall 62 is disposed between the rotation mechanism 22 and the first pole shoe 16 and the second pole shoe 18. The partition wall 62 is formed in a plate shape perpendicular to the second direction, and a front surface 62a thereof abuts against a rear portion 30a of the base portion 30 of each of the first pole shoe 16 and the second pole shoe 18. The rotation mechanism 22 is fastened to a rear surface 62b of the partition wall 62. The partition wall 62 has a through hole 62c penetrating in the second direction at a central part thereof. The through hole 62c is formed in a circular shape concentric with the rotation axis C of the magnet 35. The sleeve 56 is mounted on the through hole 62c.

As shown in FIG. 3, the first arm portion 64 and the second arm portion 66 protrude from the front surface 62a of the partition wall 62 in the second direction. The first arm portion 64 abuts against an end portion of the first pole shoe 16 in the attraction direction. Bolts 68 are attached to the first arm portion 64. The first arm portion 64 and the first pole shoe 16 are fastened to each other by the bolts 68. The second arm portion 66 abuts against an end portion of the second pole shoe 18 in the attraction direction. The second arm portion 66 and the second pole shoe 18 are fastened to each other by the bolts 70.

As shown in FIG. 5, the yoke 36, the first spacer 38, and the second spacer 40 are disposed between the first arm portion 64 and the second arm portion 66. The yoke 36, the first spacer 38, the second spacer 40, the first pole shoe 16, the second pole shoe 18, and the frame member 24 form an accommodation chamber 72 that accommodates the magnet assembly 34. The rear portion of the accommodation chamber 72 is closed by the rotation mechanism 22.

As shown in FIG. 3, a plate-shaped fixing plate 74 may be attached to the frame member 24, as necessary. The fixing plate 74 is used for attaching angle fittings or the like that couple the industrial robot 10 and the magnetic gripper 14.

As shown in FIG. 4, the rotation mechanism 22 includes the motor 50 and a housing 76. Although various types of motors can be used as the motor 50, a stepper motor that can adjust the magnet angle with high accuracy can be suitably used. The motor 50 has a rotating shaft 52 and rotates the magnet 35 through the rotating shaft 52. As shown in FIG. 3, the motor 50 is fixed to the rear surface 62b of the frame member 24 via a ring spacer 78.

As shown in FIG. 4, the housing 76 is a box-shaped member, and protects the motor 50 by covering the periphery of the motor 50. In the above description, an example in which the motor 50 is used as the rotation mechanism 22 has been described, but the present embodiment is not limited thereto. In some embodiments, the rotation mechanism 22 may be configured by combining an air cylinder and various mechanisms (for example, a cam mechanism or a rack mechanism) that convert linear motion of the air cylinder into rotational motion.

Hereinafter, the operation of the magnetic gripper 14 of the present embodiment will be described.

In the case that the workpiece W is not attracted, the magnet 35 is disposed in the direction shown in FIG. 5. A magnetic pole direction P connecting the center of the N pole and the center of the S pole of the magnet 35 is aligned with the third direction of the yoke 36. The magnet angle θ of the magnet 35 shown in FIG. 5 is 0 degrees. At the magnet angle of 0 degrees, almost all of the magnetic flux of the magnet 35 is collected in the yoke 36. Note that the arrangement of the N pole and the S pole at 0 degrees may be opposite to the illustrated example.

The magnetic flux emitted from the N pole of the magnet 35 flows through the first wall portion 36b of the yoke 36 toward the front side of the drawing sheet of FIG. 5, reaches the second wall portion 36c through the distal end wall 36a (see FIG. 3), flows toward the rear side of the drawing sheet of FIG. 5, and return to the S pole of the magnet 35. In FIG. 5, a circle with a dot at the center represents magnetic flux flowing in the frontward direction of the drawing sheet, and a circle with X represents magnetic flux flowing in the rearward direction of the drawing sheet. The yoke 36 is magnetically separated from the first pole shoe 16 by the first spacer 38 and is magnetically separated from the second pole shoe 18 by the second spacer 40. Therefore, at the magnet angle of 0 degrees, the magnetic flux of the magnet 35 leaks neither to the first pole shoe 16 nor the second pole shoe 18. Therefore, the first pole shoe 16 and the second pole shoe 18 do not generate an attraction force.

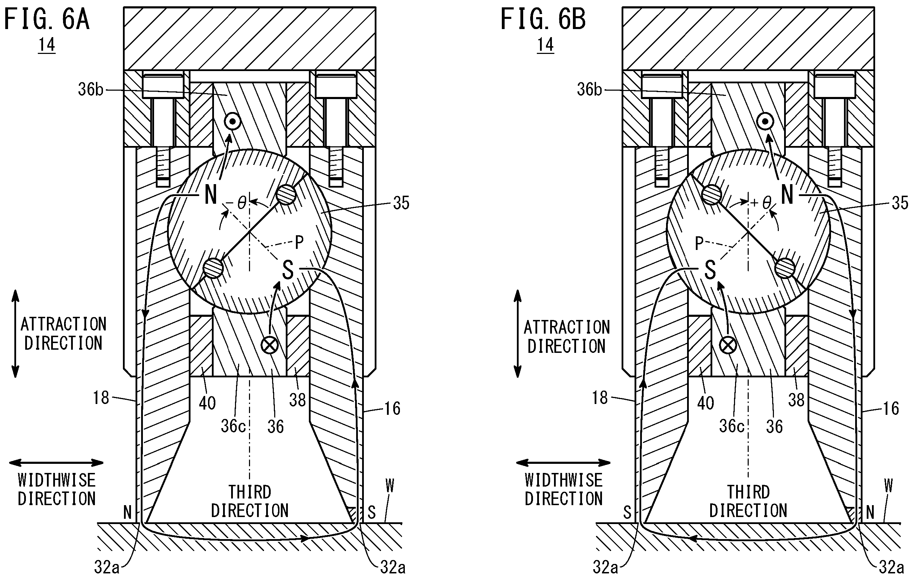

As shown in FIG. 6A, when the magnet 35 is rotated to a magnet angle -θ, the N pole approaches the second pole shoe 18, and the S pole approaches the first pole shoe 16. As a result, a part of the magnetic flux flows through the second pole shoe 18 and the first pole shoe 16, and the first pole shoe 16 and the second pole shoe 18 are magnetized, thereby generating a magnetic field at the attraction portion 32a. Accordingly, an attraction force is generated between the first pole shoe 16 and the second pole shoe 18 by the magnetic field.

As the absolute value of the magnet angle θ of the magnet 35 is increased, the ratio of the magnetic flux directed from the magnetic poles of the magnet 35 toward the first pole shoe 16 and the second pole shoe 18 increases. When the absolute value of the magnet angle θ becomes 90 degrees, almost all of the magnetic flux of the magnet 35 flows to the first pole shoe 16 and the second pole shoe 18, and the largest attraction force is generated in the first pole shoe 16 and the second pole shoe 18.

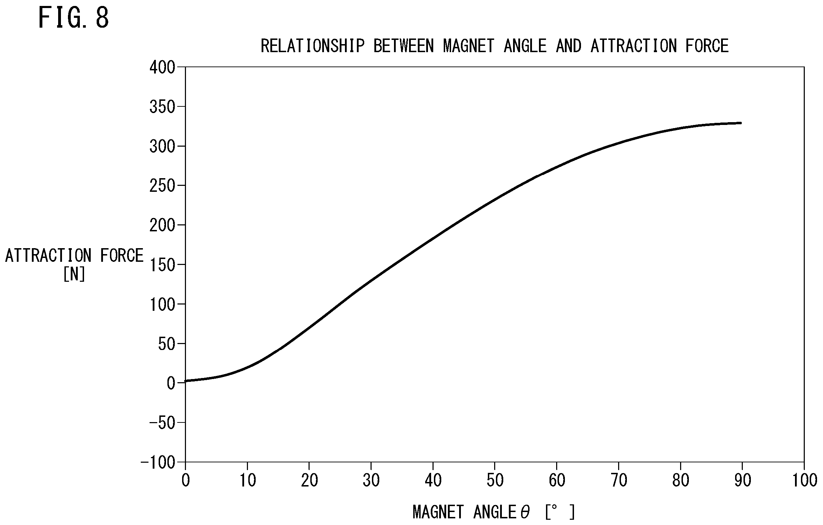

As shown in FIG. 8, when the absolute value of the magnet angle θ of the magnet 35 is increased in the range of 0 degrees to 90 degrees, the attraction force corresponding to the absolute value of the magnet angle θ can be generated.

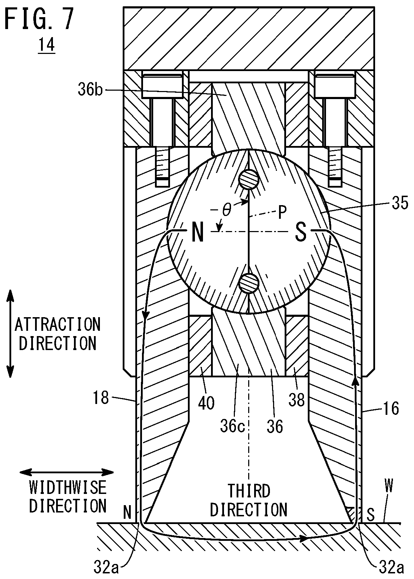

As shown in FIG. 7, in the magnetic gripper 14, when the magnet angle θ of the magnet 35 is set to -90 degrees (or +90 degrees), almost all of the magnetic flux generated by the magnet 35 is directed toward the first pole shoe 16 and the second pole shoe 18. In this case, the magnetic gripper 14 exhibits the largest attraction force.

As shown in FIG. 6B, when the magnet 35 of the magnetic gripper 14 is rotated to the magnet angle +θ, the N pole approaches the first pole shoe 16 and the S pole approaches the second pole shoe 18. As a result, the attraction portion 32a of the first pole shoe 16 is magnetized to the N pole, and the second pole shoe 18 is magnetized to the S pole. That is, the direction of the magnetic poles between the first pole shoe 16 and the second pole shoe 18 is reversed with respect to the case of the magnet angle -θ in FIG. 6A.

Therefore, the demagnetization using the magnetic gripper 14 is performed by moving the magnet 35 such that the absolute value of the magnet angle θ gradually approaches 0 degrees while causing the magnet 35 to oscillate back and forth between the magnet angle +θ and the magnet angle -θ. Accordingly, the magnetic field between the first pole shoe 16 and the second pole shoe 18 that attracts the workpiece W gradually decreases while the direction of the magnetic poles is reversed, and thus the workpiece W can be demagnetized. As described above, the magnetic gripper 14 of the present embodiment can perform demagnetization only by the rotational movement of the magnet 35 without using an electromagnetic coil for demagnetization.

### (Exemplary Modification of Embodiment)

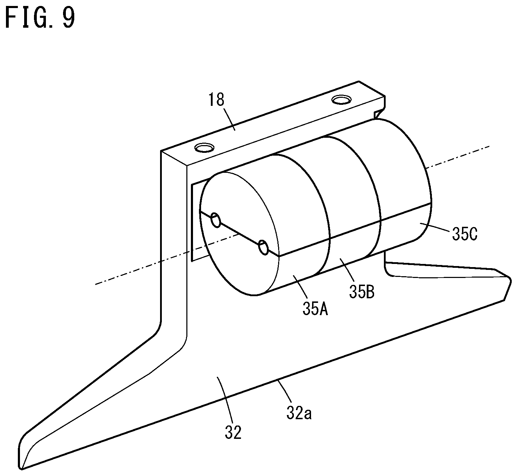

In the present embodiment, the number of magnets 35 as the magnetic flux source is not limited to one. As shown in Exemplary Modification of FIG. 9, the magnetic flux source may be configured by, for example, coupling a first magnet 35A, a second magnet 35B, and a third magnet 35C in the second direction. In FIG. 9, the illustration of the configuration other than the first magnet 35A, the second magnet 35B, the third magnet 35C, and the second pole shoe 18 is omitted. In this case, the circumferential positions of the magnetic poles of the first magnet 35A, the second magnet 35B, and the third magnet 35C coincide with each other, and these magnets rotate integrally. According to the present Exemplary Modification, the amount of magnetic flux generated by the magnetic flux source can be increased three times, and the attraction force of the magnetic gripper 14 can be increased.

Another Exemplary Modification for increasing the amount of magnetic flux of the magnets 35 is to increase the length of the magnet 35 instead of increasing the number of the magnets 35. For example, in the case that the amount of magnetic flux of the magnet 35 in FIG. 3 is to be tripled, the length of the magnet 35 in the second direction is increased three times. In this case as well, the magnetic gripper 14 can obtain a larger attraction force.

In the above description, an example in which a permanent magnet is used as a magnetic flux source has been described, but the magnetic flux source should not be construed as being limited thereto, and may be, for example, an electromagnetic coil, a superconductor, or other means for generating magnetic flux.

### (Second Embodiment)

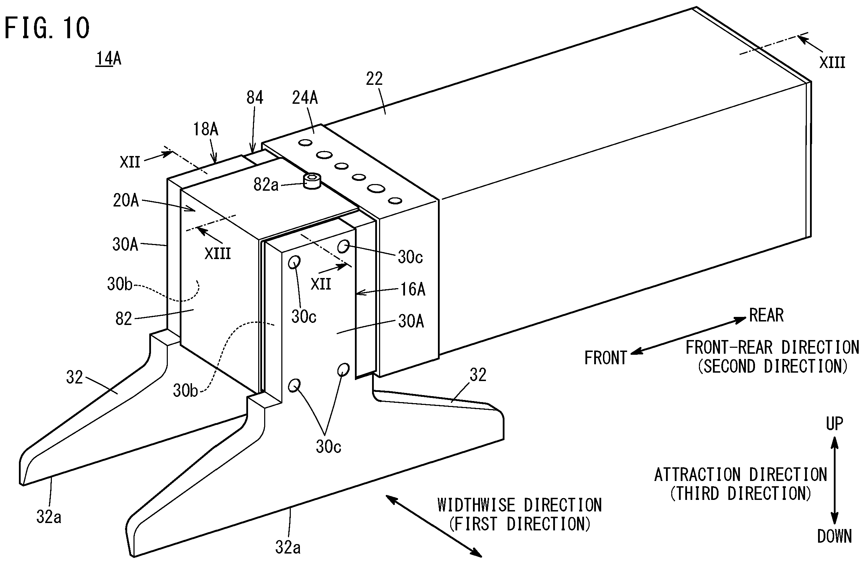

As shown in FIG. 10, the present embodiment relates to a magnetic gripper 14A according to another configuration example. In the configuration of the magnetic gripper 14A, the constituent elements common to the magnetic gripper 14 of FIG. 2 are denoted by the same reference numerals, and the detailed description thereof is omitted.

The magnetic gripper 14A includes a first pole shoe 16A, a second pole shoe 18A, a magnetic force adjustment unit 20A, a rotation mechanism 22, and a frame member 24A. The first pole shoe 16A and the second pole shoe 18A are attached to one side portion and another side portion of the magnetic force adjustment unit 20A in the first direction, respectively. The first pole shoe 16A and the second pole shoe 18A of the present embodiment have the same shape. Therefore, the description of the second pole shoe 18A is omitted.

The first pole shoe 16A includes a base portion 30A and a leg portion 32. The base portion 30A is formed in a rectangular shape and extends in the up-down direction. The leg portion 32 extends from the lower end of the base portion 30A. An attraction portion 32a is formed at a lower end portion of the leg portion 32. The shapes of the leg portion 32 and the attraction portion 32a are the same as those of the leg portion 32 and the attraction portion 32a described with reference to FIG. 2.

The base portion 30A is fixed to the side portion of the magnetic force adjustment unit 20A by fastening members such as screws or bolts through the four attachment holes 30c. The base portion 30A of the present embodiment is different from the base portion 30 described with reference to FIG. 2 in that a connecting surface 30b attached to the magnetic force adjustment unit 20A does not have the concave portion 33. That is, the connecting surface 30b of the base portion 30A is formed with a flat surface. The first pole shoe 16A does not require processing for forming the concave portion 33 in the base portion 30A, and the first pole shoe 16A, which is a consumable component, can be manufactured at low cost.

The magnetic force adjustment unit 20A is attached to the front of the frame member 24A. The upper surface, the front surface, and the lower surface of the magnetic force adjustment unit 20A are covered with a casing 82, and both side portions of the magnetic force adjustment unit 20A are covered with the first pole shoe 16A and the second pole shoe 18A. The casing 82 prevents dust and foreign matter from entering the inside of the magnetic force adjustment unit 20A, and prevents failure of the magnetic force adjustment unit 20A. The casing 82 is formed of a non-magnetic material. The casing 82 is detachably fixed to a magnetic circuit member 84, which will be described later, by a bolt 82a.

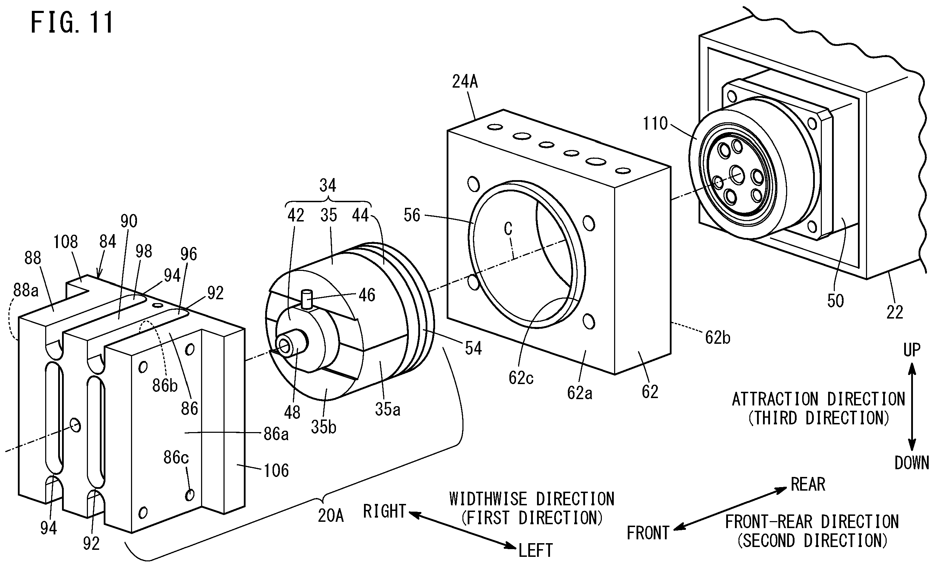

As shown in FIG. 11, the magnetic force adjustment unit 20A includes a magnet assembly 34 and the magnetic circuit member 84, in a casing 82. The magnet assembly 34 includes the magnet 35, a pin holder 42, and a magnet holder 44, which are configured as described with reference to FIG. 3.

The magnetic circuit member 84 is formed of a ferromagnetic material, or more preferably a soft magnetic material. The magnetic circuit member 84 includes a first connecting portion 86, a second connecting portion 88, a yoke 90, a first coupling portion 92, and a second coupling portion 94. The first connecting portion 86 is a flat plate-shaped portion located on the left side portion of the magnetic circuit member 84 in FIG. 11, the second connecting portion 88 is a flat plate-shaped portion located on the right side portion thereof, and the yoke 90 is located between the first connecting portion 86 and the second connecting portion 88. The yoke 90 is put between the first connecting portion 86 and the second connecting portion 88 in the widthwise direction.

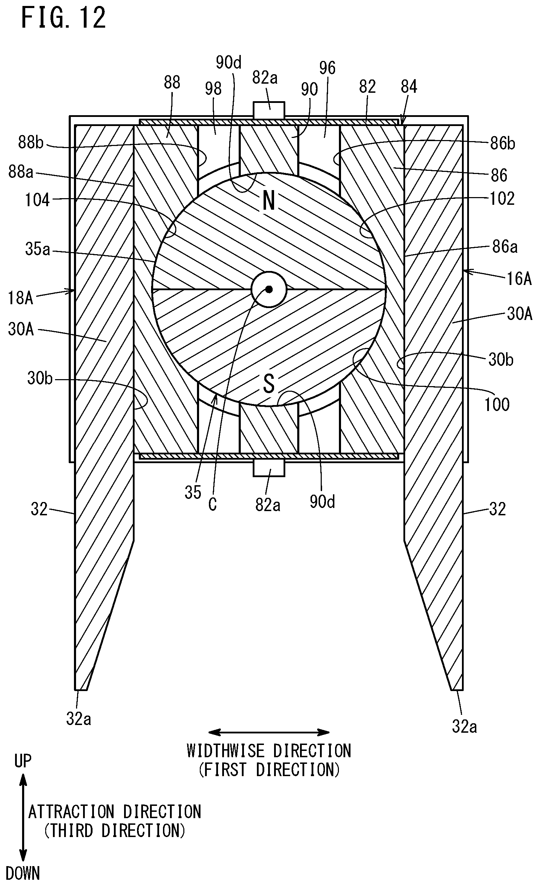

As shown in FIG. 12, the first connecting portion 86 has a first outer side portion 86a exposed to the side portion and a first inner side portion 86b facing the yoke 90. The first outer side portion 86a and the first inner side portion 86b are constituted by planes perpendicular to the first direction. A plurality of (four in the illustrated example) bolt holes 86c for fixing the first pole shoe 16A are formed at predetermined positions of the first outer side portion 86a. The first pole shoe 16A is in contact with and fixed to the first outer side portion 86a.

As shown in FIG. 11, a first protruding portion 106 is formed on a rear portion of the first outer side portion 86a. The first protruding portion 106 protrudes outward in the widthwise direction from the first outer side portion 86a of the first connecting portion 86. The first protruding portion 106 extends in the up-down direction. The protruding amount of the first protruding portion 106 in the widthwise direction with respect to the first outer side portion 86a is equal to the thickness of the first pole shoe 16A (the dimension of the base portion 30A in the widthwise direction). As shown in FIG. 10, the first pole shoe 16A is attached to the front side of the first protruding portion 106.

As shown in FIG. 12, a first concave portion 102 is formed in the first inner side portion 86b of the first connecting portion 86 facing the yoke 90 so as not to interfere with the cylindrical columnar magnet 35. The first concave portion 102 is formed with a curved surface along the radius of rotation of the magnet 35 about a rotation axis C.

As shown in FIG. 12, the second connecting portion 88 has a second outer side portion 88a exposed to the side portion and a second inner side portion 88b facing the yoke 90. The second outer side portion 88a and the second inner side portion 88b are constituted by planes in parallel to the front-rear direction and the up-down direction. Although not particularly shown, a plurality of bolt holes (not shown) for fixing the second pole shoe 18A are formed at predetermined positions of the second outer side portion 88a. The second pole shoe 18A is in contact with and fixed to the second outer side portion 88a.

As shown in FIG. 11, a second protruding portion 108 is formed on a rear portion of the second outer side portion 88a. The second protruding portion 108 protrudes outward in the widthwise direction from the second outer side portion 88a of the second connecting portion 88. The second protruding portion 108 extends in the up-down direction. The protruding amount of the second protruding portion 108 in the widthwise direction with respect to the second outer side portion 88a is equal to the thickness of the second pole shoe 18A. As shown in FIG. 10, the second pole shoe 18A is attached to the front side of the second protruding portion 108.

As shown in FIG. 12, a second concave portion 104 is formed in the second inner side portion 88b of the second connecting portion 88 so as not to interfere with the cylindrical columnar magnet 35. The second concave portion 104 is formed with a curved surface along the radius of rotation of the magnet 35 about the rotation axis C.

A first gap portion 96 is formed between the yoke 90 and the first connecting portion 86. The first gap portion 96 is a gap formed by cutting out a magnetic body forming the magnetic circuit member 84, and generates a large magnetic reluctance between the yoke 90 and the first connecting portion 86.

A second gap portion 98 is formed between the yoke 90 and the second connecting portion 88. The second gap portion 98 is a gap formed by cutting out a magnetic body forming the magnetic circuit member 84, and generates a large magnetic reluctance between the yoke 90 and the second connecting portion 88. That is, the yoke 90 is substantially magnetically separated from the first connecting portion 86 and the second connecting portion 88 by means of the first gap portion 96 and the second gap portion 98.

As shown in FIG. 11, the first coupling portions 92 are formed between the first connecting portion 86 and the yoke 90. The first coupling portions 92 are provided at the front end portion and the rear end portion of the magnetic circuit member 84, respectively. The first coupling portions 92 are formed integrally with the first connecting portion 86 and the yoke 90, and couple the first connecting portion 86 and the yoke 90. The first coupling portions 92 keep the distance of the first gap portion 96 at a constant value. Each of the first coupling portions 92 has a surface that is cut out in a curved shape so that the cross-sectional area becomes smaller at the central part in the widthwise direction, in order to prevent a decrease in magnetic reluctance.

The second coupling portions 94 are formed between the second connecting portion 88 and the yoke 90. The second coupling portions 94 are provided at the front end portion and the rear end portion of the magnetic circuit member 84, respectively. The second coupling portions 94 are formed integrally with the second connecting portion 88 and the yoke 90, and couple the second connecting portion 88 and the yoke 90. The second coupling portions 94 keep the distance of the second gap portion 98 at a constant value. Each of the second coupling portions 94 has a surface that is cut out in a curved shape so that the cross-sectional area becomes smaller at the central part in the widthwise direction, in order to prevent a decrease in magnetic reluctance.

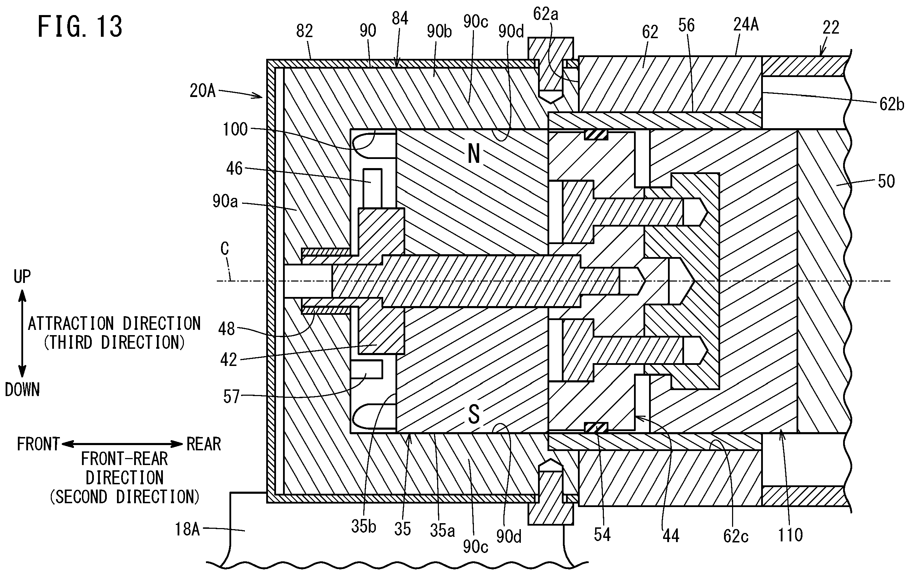

As shown in FIG. 13, the yoke 90 has a C-shaped cross section when viewed in the widthwise direction (first direction), and has a distal end wall 90a, a first wall portion 90b, and a second wall portion 90c. The distal end wall 90a extends in a third direction (the attraction direction in the illustrated example). The distal end wall 90a is located outward of the distal end surface 35b of the magnet 35. The first wall portion 90b extends from the upper end of the distal end wall 90a toward the frame member 24A in the front-rear direction, and covers the upper side of the magnet 35. The second wall portion 90c extends from the lower end of the distal end wall 90a toward the frame member 24A in the front-rear direction, and covers the lower side of the magnet 35.

The first wall portion 90b and the second wall portion 90c sandwich the outer circumferential surface 35a of the magnet 35 from both sides in the third direction. Each of the first wall portion 90b and the second wall portion 90c has a third concave portion 90d at a portion facing the magnet 35 along the radius of rotation of the outer circumferential surface 35a of the magnet 35. The third concave portion 90d is formed to be recessed so as not to interfere with the outer circumferential surface 35a of the magnet 35, and allows the rotation of the magnet 35. The third concave portion 90d may be in contact with the magnet 35 or be out of contact with the magnet 35.

The yoke 90 has a second pin 57. The second pin 57 is, for example, a parallel pin, and extends rearward from the distal end wall 90a of the yoke 90. The second pin 57 abuts against the first pin 46 to limit the rotation range of the magnet 35. When the motor 50 is configured by a stepper motor, a magnet angle θ (rotational position) at which the first pin 46 and the second pin 57 abut against each other can be used for initialization of the motor 50.

As shown in FIG. 12 and FIG. 13, a cylindrical accommodation space 100 is formed inside the magnetic circuit member 84 by the first concave portion 102, the second concave portion 104, and the third concave portion 90d. The magnet assembly 34 is rotatably accommodated in the accommodation space 100.

As described above, in the magnetic circuit member 84 according to the present embodiment, the first connecting portion 86, the second connecting portion 88, and the yoke 90 are integrally joined by the first coupling portions 92 and the second coupling portions 94. Therefore, the magnetic circuit member 84 can be handled as a single component, the number of components is reduced, and an assembly process is not required, which is suitable for suppressing the manufacturing cost.

As shown in FIG. 11 and FIG. 13, the frame member 24A is disposed between the rotation mechanism 22 and the magnetic force adjustment unit 20A. The frame member 24A has a partition wall 62. The partition wall 62 is formed in a plate shape perpendicular to the second direction, and a front surface 62a thereof abuts against the magnetic circuit member 84. The rotation mechanism 22 is fastened to a rear surface 62b of the partition wall 62. The partition wall 62 has a through hole 62c penetrating in the second direction at a central part thereof. The through hole 62c is formed in a circular shape concentric with the rotation axis C of the magnet 35. A sleeve 56 is mounted on the through hole 62c. The through hole 62c accommodates the magnet holder 44 of the magnet assembly 34 and a rotation block 110 of the rotation mechanism 22, and guides the rotational movement of these components.

A plurality of screw holes for connecting to the robot arm 12 (FIG. 1) of the industrial robot 10 are formed in an upper part of the frame member 24A. The magnetic gripper 14A is attached to the robot arm 12 via the frame member 24A.

The rotation block 110 is a cylindrical columnar member attached to the rotating shaft 52 of the motor 50, and is coupled to the magnet holder 44 of the magnet assembly 34. The rotation block 110 transmits the rotational force of the motor 50 to the magnet assembly 34.

The magnetic gripper 14A of the present embodiment is configured as described above and operates as described below.

As shown in FIG. 12, in the non-attracted state, the magnet 35 of the magnetic gripper 14A is disposed in a direction in which the centers of the pair of magnetic poles face the yoke 90. The magnetic lines of force emitted from one magnetic pole of the magnet 35 are collected by the yoke 90, and flow to the other magnetic pole through the inside of the yoke 90 having a low magnetic reluctance. The magnetic lines of force emitted to the outside of the yoke 90 flow through the inside of the first connecting portion 86 or the second connecting portion 88 in a short-circuit manner. Therefore, the magnetic lines of force of the magnet 35 flow only inside the magnetic circuit member 84, and the magnetic lines of force are not emitted from the first pole shoe 16A and the second pole shoe 18A, so that the workpiece W is not attracted.

The magnetic gripper 14A is brought into the attracted state by rotating the magnet 35 by 90 degrees with respect to the position of the magnet 35 in FIG. 12. In the attracted state, the center line of the magnetic poles of the magnet 35 is oriented in the first direction, and the magnetic lines of force emitted from one magnetic pole of the magnet 35 flows to the first pole shoe 16A through the first connecting portion 86. The magnetic lines of force are emitted from the attraction portion 32a of the first pole shoe 16A, flow through the workpiece W, and flow into the second pole shoe 18A. The magnetic lines of force flowing into the second pole shoe 18A are returned to the other magnetic pole of the magnet 35 through the second connecting portion 88. At this time, since the yoke 90 is magnetically separated from the first connecting portion 86 and the second connecting portion 88 via the first gap portion 96 and the second gap portion 98, most of the magnetic lines of force flow to the workpiece W without short-circuiting the yoke 90. Therefore, the magnetic gripper 14A can attract the workpiece W with a strong attraction force.

The magnetic gripper 14A can be brought into the non-attracted state by returning the position of the magnet 35 to the position in FIG. 12. Similarly to the magnetic gripper 14, the workpiece W magnetized by attraction can be demagnetized by gradually reducing the swing angle range while rotating the magnet 35 to swing to the magnet angle +θ (FIG. 6B) and the magnet angle -8 (FIG. 6A) about the position in FIG. 12.

As described above, the magnetic gripper 14A of the present embodiment can demagnetize the workpiece W only by the rotation operation of the magnet 35 without providing an electromagnetic coil for demagnetization, and thus the device configuration can be simplified. Further, the magnetic circuit member 84 is integrated with the magnetic gripper 14A, so that the number of components can be reduced, and the number of assembling steps can be reduced, thereby manufacturing the magnetic gripper LA at low cost. Further, it is not necessary to form the concave portion 33 in the first pole shoe 16A and the second pole shoe 18A which are consumable components, and it is possible to divert pole shoes designed and manufactured for other magnetic grippers, which is effective in reducing running costs.

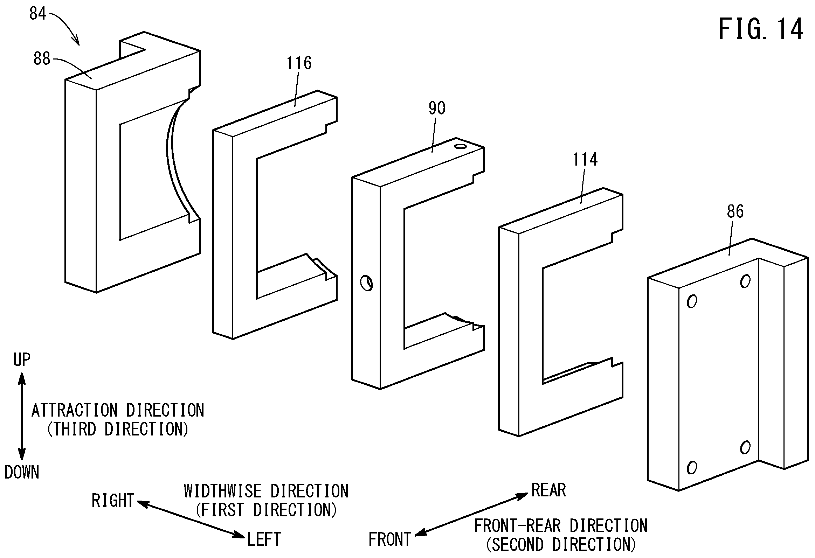

Although the magnetic circuit member 84 is integrally formed of a magnetic material in the example described above, the present embodiment is not limited to this example, the magnetic circuit member 84 may be formed of magnetic materials in which the first connecting portion 86, the second connecting portion 88, and the yoke 90 are separate as shown in FIG. 14. In this case, the first connecting portion 86, the second connecting portion 88, and the yoke 90 may be coupled by a first gap member 114 and a second gap member 116 formed of nonmagnetic members having a C-shape when viewed in the first direction, into the magnetic circuit member 84.

The following Supplementary Notes are further disclosed in relation to the above-described embodiments.

### (Supplementary Note 1)

One aspect of the disclosure is characterized by the magnetic gripper (14) including the pair of pole shoes (16, 18) each including the attraction portion (32a) to which the workpiece (W) is attracted, the pair of pole shoes being disposed apart from each other in the first direction, the magnetic flux source disposed between the pair of pole shoes and including the pair of magnetic poles orientable in the first direction, the rotation mechanism (22) configured to rotate the magnetic flux source about the rotation axis (C) lying in the second direction perpendicular to the first direction, and the yoke (36, 90) disposed between the pair of pole shoes and configured to collect the magnetic flux not directed toward the pole shoes, wherein the yoke is magnetically separated from the pair of pole shoes.

The magnetic gripper described above can generate a magnetic field corresponding to an angle of a magnetic flux source between the pair of pole shoes by rotating the magnetic flux source (as an example, a magnet). Further, depending on the angle of the magnetic flux source, the magnetic poles can be reversed between the pair of pole shoes. Therefore, the magnetic gripper can demagnetize the workpiece only by the rotation operation of the magnetic flux source without providing an electromagnetic coil for demagnetization, and thus the device configuration can be simplified.

### (Supplementary Note 2)

In the magnetic gripper according to Supplementary Note 1, the yoke may include the distal end wall (36a) configured to cover the outward side of the distal end of the magnetic flux source in the second direction, the first wall portion (36b) extending from the first end portion (36d) of the distal end wall in the second direction and configured to cover the outer circumferential surface (35a) of the magnetic flux source, and the second wall portion (36c) extending from the second end portion (36e) of the distal end wall in the second direction and configured to cover the outer circumferential surface of the magnetic flux source. In the case that the attraction is not performed, this magnetic gripper can prevent the leakage of the magnetic field and the attraction of foreign substance, by absorbing the magnetic flux of the magnetic flux source (magnet) by the first wall portion and the second wall portion.

### (Supplementary Note 3)

The magnetic gripper according to Supplementary Note 1 or 2 may further include the pair of spacers (38, 40) made of the non-magnetic material and configured to sandwich the yoke in the first direction, wherein the yoke may be coupled to the pair of pole shoes via the pair of spacers. In this magnetic gripper, the spacer weakens the magnetic coupling between the yoke and the pair of pole shoes, thereby achieving magnetic separation. The spacer fills the gap between the yoke and the pole shoes, thereby preventing dust from entering the rotating portion of the magnetic flux source.

### (Supplementary Note 4)

In the magnetic gripper according to Appendix 2, the yoke may include the concave portion (36f) curved along the radius of rotation of the magnetic flux source in each of the first wall portion and the second wall portion. In this magnetic gripper, the magnetic poles of the magnetic flux source can be disposed close to the yoke, and thus leakage of the magnetic field can be more effectively prevented.

### (Supplementary Note 5)

The magnetic gripper according to any one of Supplementary Notes 1 to 4 may further include the frame member (24) configured to couple the pair of pole shoes, the yoke, and the rotation mechanism. This magnetic gripper has excellent strength by connecting the respective members with the frame member.

### (Supplementary Note 6)

The magnetic gripper according to Supplementary Note 5 may further include the first pin (46) configured to rotate integrally with the magnetic flux source, and the second pin (57) fixed to any of the pole shoes, the yoke, or the frame member, and configured to limit the rotation range of the magnetic flux source by abutting on the first pin. This magnetic gripper can increase the reliability of operation by limiting the rotation range of the magnetic flux source. Further, the magnetic gripper can prevent the angular deviation by initializing the motor with the contact position of the first pin and the second pin as the reference position.

### (Supplementary Note 7)

In the magnetic gripper according to any one of Supplementary Notes 1 to 6, the magnetic flux source may be formed in the circular shape when viewed in the second direction, and be magnetized in the radial direction perpendicular to the second direction. In this magnetic gripper, the magnetic force can be easily adjusted depending on the angle of the magnetic flux source by the magnetic flux distribution in the circumferential direction, and the demagnetization operation can be more reliably performed.

### (Supplementary Note 8)

In the magnetic gripper according to any one of Supplementary Notes 1 to 7, the magnetic flux source may include the plurality of magnets that are coupled in the second direction and rotate integrally. This magnetic gripper can increase the attraction force.

### (Supplementary Note 9)

In the magnetic gripper according to any one of Supplementary Notes 1 to 8, the pair of pole shoes may include the first pole shoe (16A) and the second pole shoe (18A) facing the first pole shoe, wherein the magnetic gripper may further include the first connecting portion (86) disposed between the magnetic flux source and the first pole shoe, and through which magnetic flux of the magnetic flux source flows to the first pole shoe, and the second connecting portion (88) disposed between the magnetic flux source and the second pole shoe, and through which magnetic flux of the magnetic flux source flows to the second pole shoe, and wherein the yoke may be disposed between the first connecting portion and the second connecting portion and be magnetically separated from the first connecting portion and the second connecting portion via the first gap portion (96) and the second gap portion (98). In this magnetic gripper, the first pole shoe and the second pole shoe do not need a concave portion for avoiding interference with the rotational movement of the magnetic flux source, and the cost of the first pole shoe and the second pole shoe, which are consumable components, can be reduced.

### (Supplementary Note 10)

The magnetic gripper according to Supplementary Note 9 may further include the magnetic circuit member (84) in which the first connecting portion, the second connecting portion, and the yoke may be integrally joined via the coupling portion (92, 94). This magnetic gripper can reduce the number of components and the number of assembly steps.

### (Supplementary Note 11)

Another aspect is characterized by the magnetic gripper including the pair of pole shoes each including the attraction portion to which the workpiece is attracted, the pair of pole shoes being disposed apart from each other in the first direction, the single magnetic flux source disposed between the pair of pole shoes and including the pair of magnetic poles orientable in the first direction, the rotation mechanism configured to rotate the magnetic flux source about the rotation axis extending in the second direction perpendicular to the first direction, and the magnetic field sensor (80) configured to detect the magnetic field of the pole shoes. This magnetic gripper can detect the attraction of the plurality of overlapped workpieces based on the magnetic field detected by the magnetic field sensor.

### (Supplementary Note 12)

Another aspect of the disclosure is characterized by the industrial robot (10) including the magnetic gripper according to any one of Supplementary Notes 1 to 11, and the robot arm (12) to which the magnetic gripper is attached. Since this industrial robot can attract and demagnetize the workpiece only by the rotation operation of the magnetic flux source of the magnetic gripper, the structure is simplified and the power consumption can be suppressed.

It should be noted that the present invention is not limited to the disclosure described above, and various configurations could be adopted therein without departing from the essence and gist of the present invention.

## Claims

1. A magnetic gripper (14) comprising:
a pair of pole shoes (16, 18) each including an attraction portion (32a) to which a workpiece (W) is attracted, the pair of pole shoes being disposed apart from each other in a first direction;
a magnetic flux source disposed between the pair of pole shoes and including a pair of magnetic poles orientable in the first direction;
a rotation mechanism (22) configured to rotate the magnetic flux source about a rotation axis (C) lying in a second direction perpendicular to the first direction; and
a yoke (36, 90) disposed between the pair of pole shoes and configured to collect magnetic flux not directed toward the pole shoes,
wherein the yoke is magnetically separated from the pair of pole shoes.

2. The magnetic gripper according to claim 1,
wherein the yoke includes:
a distal end wall (36a) configured to cover an outward side of a distal end of the magnetic flux source in the second direction;
a first wall portion (36b) extending from a first end portion (36d) of the distal end wall in the second direction and configured to cover an outer circumferential surface (35a) of the magnetic flux source; and
a second wall portion (36c) extending from a second end portion (36e) of the distal end wall in the second direction and configured to cover the outer circumferential surface of the magnetic flux source.

3. The magnetic gripper according to claim 1, further comprising a pair of spacers (38, 40) made of a non-magnetic material and configured to sandwich the yoke in the first direction,
wherein the yoke is coupled to the pair of pole shoes via the pair of spacers.

4. The magnetic gripper according to claim 2,
wherein the yoke includes a concave portion (36f) curved along a radius of rotation of the magnetic flux source in each of the first wall portion and the second wall portion.

5. The magnetic gripper according to claim 1, further comprising a frame member (24) configured to couple the pair of pole shoes, the yoke, and the rotation mechanism.

6. The magnetic gripper according to claim 5, further comprising:
a first pin (46) configured to rotate integrally with the magnetic flux source; and
a second pin (57) fixed to any of the pole shoes, the yoke, or the frame member, and configured to limit a rotation range of the magnetic flux source by abutting on the first pin.

7. The magnetic gripper according to claim 1,
wherein the magnetic flux source is formed in a circular shape when viewed in the second direction, and is magnetized in a radial direction perpendicular to the second direction.

8. The magnetic gripper according to claim 1,
wherein the magnetic flux source includes a plurality of magnets that are coupled in the second direction and rotate integrally.

9. The magnetic gripper according to claim 1,
wherein the pair of pole shoes include a first pole shoe (16A) and a second pole shoe (18A) facing the first pole shoe,
wherein the magnetic gripper further comprises:
a first connecting portion (86) disposed between the magnetic flux source and the first pole shoe, and through which magnetic flux of the magnetic flux source flows to the first pole shoe; and
a second connecting portion (88) disposed between the magnetic flux source and the second pole shoe, and through which magnetic flux of the magnetic flux source flows to the second pole shoe, and
wherein the yoke is disposed between the first connecting portion and the second connecting portion and is magnetically separated from the first connecting portion and the second connecting portion via a first gap portion (96) and a second gap portion (98).

10. The magnetic gripper according to claim 9, further comprising a magnetic circuit member (84) in which the first connecting portion, the second connecting portion, and the yoke are integrally joined via a coupling portion (92, 94).

11. A magnetic gripper comprising:
a pair of pole shoes each including an attraction portion to which a workpiece is attracted, the pair of pole shoes being disposed apart from each other in a first direction;
a single magnetic flux source disposed between the pair of pole shoes and including a pair of magnetic poles orientable in the first direction;
a rotation mechanism configured to rotate the magnetic flux source about a rotation axis extending in a second direction perpendicular to the first direction; and
a magnetic field sensor (80) configured to detect a magnetic field of the pole shoes.

12. An industrial robot (10) comprising:
the magnetic gripper according to any one of claims 1 to 11; and
a robot arm (12) to which the magnetic gripper is attached.
